# EUROPEAN PATENT SPECIFICATION

(11) **EP 3 481 646 B1**
(45) Date of publication and mention of the grant of the patent: **15.04.2026**
(21) Application number: 17768340.6
(22) Date of filing: 04.07.2017
(51) Int. Cl.: B60B 37/00, C21D 1/10

(54) **AXLE FOR RAIL VEHICLES**
ACHSE FÜR SCHIENENFAHRZEUGE
ESSIEU POUR VÉHICULES FERROVIAIRES

(30) Priority: 07.07.2016 CZ 20160414
(43) Date of publication of application: 15.05.2019
(73) Proprietor: Bonatrans Group A.S., 735 94 Bohumin (CZ)
(72) Inventor: FAJKOS, Rostislav, 700 30 Ostrava (CZ)
(74) Representative: PATENTSERVIS Praha, a.s.
(86) International application number: PCT/CZ2017/000045
(87) International publication number: WO 2018/006887

(56) References cited:
- WO-A1-2011/013559
- JP-A- 2001 206 002
- US-A- 3 024 626

## Description

### Field of the Invention

The technical solution according to the present invention relates to a heat-treated axle for all models of rail vehicles, which axle is made of any steel suitable for heat treatment.

### Background of the Invention

When a rail vehicle is riding, cyclic loading of the axles takes place due to the dynamic effects. In the case of usual life span of about 20 years of a train of wagons for high-speed transport, it represents hundreds or even thousands of millions of load cycles if the mileage of the wheelsets is considered. In case of such a high-cyclical axle load, there is an effort to use such designs that are designed with a higher safety factor, and further, with better materials that are heat treated by hardening. In spite of that, the life spans of axles is reduced and limited due to surface corrosion, because the paint coating is damaged in operation, there are mechanical defects, and there are damages caused on unprotected parts of axles, as well as because of fretting corrosion in the pressed joints, but also due to damage caused during disassembly of the pressed parts on axle during repair or replacement of the worn parts for new ones.

So far, different innovative methods have been used to increase the life span and reliability of axles. The basic innovation is the development and optimization of the axle material itself, that is of the steel and of its chemical composition, including subsequent heat treatment that give to the material the ultimate properties in terms of mechanical values and material structure. However, actually, the so optimized axle materials, the technology of their production and of the final heat treatment contribute to improvements of the required properties in the extent of a few per cents only.

As an additional protection of the axle body free surface serves also such solution, which allows to use special protection covers, foils, and various laminated materials, which serve as additional protection of the unprotected free surface of the axle body, as it is disclosed in EP 1690701.

Another method for improving of the desired axle properties is the use of special metallic and non-metallic layers, which layers are applied to the exposed axle parts using different technologies. The oldest method in this respect is the hot spraying of the molybdenum layer on the axle seats, which method is now defined for example by the German standard BN 918260. Further, an example of such a solution is spraying providing a coating of the Ni, Ni Cr, Ni Br material layer. These layers are deposited in thicknesses of tenths of millimetre, usually 0.5 to 1 mm. Subsequently they are machined to a final thickness in the range of 0.1 to 0.3 mm. However, with regard to the expensive materials and technologies for such spraying, including the final machining, this method is used for selected and most exposed parts of axles only, such as for wheel seats, bearing journals, or seats for mounting of the drive gear.

The last method of improving the axle life span and the axle reliability is induction hardening, especially known from the Shinkansen high-speed axles. This is a solution known from the patents FR 2018372, or JP 3329263. However, this solution is used for a particular chemical composition of the steel-based material only, which material is used primarily on the Japanese railway. A disadvantage of these solutions is their use on selected materials only, but mainly they are solutions applied only to the most stressed parts of the axles that is on the axle seats of the axles where the travelling wheels are pressed on them.

Another axle for rail vehicles is known from JP2001206002 A.

### Summary of the Invention

The above-mentioned drawbacks are eliminated in an axle design for rail vehicles, which axles are made of heat-treated material, the essence of which is that in all cylindrical parts and the transitional parts along the entire length of the axle surface the axle surface is formed by a reinforced, inductively hardened layer having of uniform depth from the axle surface and this inductively hardened layer continues with a transition layer with a gradually decreasing gradient of reinforcing and of increased mechanical values.

In a preferable embodiment, the transition layer depth is equal to at least 1.5 times of the depth of the inductively hardened layer.

An advantage of this embodiment of the axle is that a certain uniform thickness of material with a high strength limit and hardness of 1.5 to 2.5 times of that achieved after the basic heat treatment, as it is specified, for example, in the standards for production of railway axles, is produced along the entire length of the axle.

By a correct choice of technology and by the optimization of the induction hardening parameters, as well as by the design of the equipment itself, a uniform thickness of a sufficiently heat-treated layer over the entire length of the axle, without significant differences, especially between the cylindrical parts and the transition parts, was obtained. This limits the area of creating of the so-called material notches, which notches are dangerous, and in which places the lifetime and/or the fatigue strength may remain unincreased, or even may be reduced. Thus, the described solution will ensure achievement of perfect, high mechanical material values, including of those of fatigue on the surface and at depths up to about 6 mm below the surface in the entire length of the axle, with a gradual gradient of these properties at a depth of further 10 mm where there is a gradual transition up to the level of parameters and properties of the basic material or of the material in the initial state after basic heat treatment, with the mechanical properties as they are specified in the relevant standards for the production of axles, such as is first of all the European Standard EN 13261, or the American Standard AAR M101, and the in them defined different grades of steels, including their chemical compositions.

A further advantage of such a solution with an inductively hardened uniform layer over the entire length of the axle is the highly homogeneous field of residual compression stresses that present a level of up to 900 MPa on the surface even after the final machining up to the state for assembly of the axle. Together with the high strength of the material after induction hardening, development of any defects or initialization cracks at any point of the axle is made impossible.

The last advantage is that for high speeds above 200 km/h, as they are defined e. g. by the above-mentioned EN 13261 standard, the so produced axles do not need any use of a few millimetres thick layer of paint coating on the axle body to prevent impacts of the ballast from the track at areas of free, unprotected surface of the axle, and such solution also allows avoid using of any special protective shields, foils, and various laminated materials that served as additional protection of the unprotected, free surface of the axle body.

### Brief Description of the Drawings

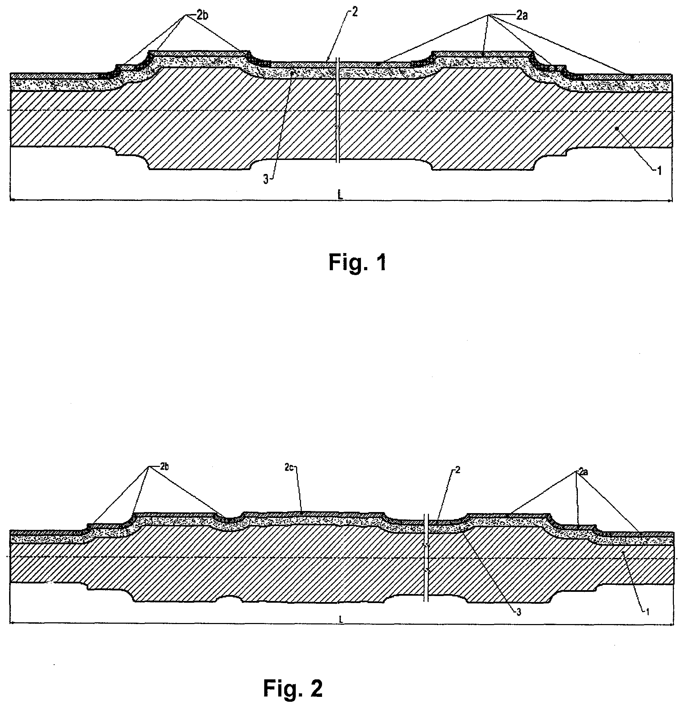

Figures 1 and 2 shows an embodiment of the axle with a inductively hardened layer over the full surface length of an axle for rail vehicles.

### Examples of Embodiments of the Invention

### Example 1

An exemplary embodiment of a conventional axle with an inductively hardened layer over the entire length of the axle surface of an axle for rail vehicles according to Figure 1 comprises a surface of an axle 1, an inductively hardened layer 2, and a transitional layer 3, all of them along the entire length L of the axle 1 surface. In all cylindrical portions 2a, in the region of the seat, the axle body, the journal and the seat for a sealing ring, and in the transitional portions 2b, and in the to it adjoining transitional layer 3, the inductively hardened layer 2 consists of a gradually decreasing gradient of reinforcing. The inductively hardened layer 2 has a uniform depth along the entire length L of the axle 1 protective surface. The transition layer 3 has a depth equal to at least 1.5 times of the depth of the inductively hardened layer 2.

### Example 2

An exemplary embodiment of a conventional axle with an inductively hardened layer along the entire length of the axle surface of an axle for rail vehicles according to Figure 2 consists of the axle 1 surface, of the inductively hardened layer 2, and of the transition layer 3, wherein, all of them are extending along the entire length L of the surface of the axle 1. The inductively hardened layer 2 consists in all cylindrical portions 2a, in the region of the seat, the axle body , the journals, and the seat of the sealing ring, in the transition parts 2b, and in the complete zone for mounting of the driving gear-box 2c, and in the adjoining transition layer 3, of a gradually decreasing gradient of reinforcing. The inductively hardened layer 2 has a uniform depth along the entire length L of the axle 1 protective surface. The transition layer 3 has a depth equal to at least 1.5 times of the depth of the inductively hardened layer 2.

### Industrial Use

The above-disclosed solution of the inductively hardened layer over its entire length and parts is intended for use in all models of rail vehicles, especially for heavily stressed rail vehicles and for high-speed rail vehicles with high annual mileage representing millions of load cycles.

## Claims

1. An axle for rail vehicles, preferably for the railway ones, which axles are made of heat-treated material, **characterized in that** in all cylindrical parts (2a) and the transitional parts (2b) along the entire length (L) of the axle (1) surface the axle (1) surface is formed by a reinforced, inductively hardened layer (2) having a uniform depth from the axle (1) surface and this inductively hardened layer (2) continues with a transition layer (3) with a gradually decreasing gradient of reinforcing.

2. The axle for rail vehicles of claim 1, **characterized in that** transition layer (3) depth is equal to at least 1.5 times of the depth of the inductively hardened layer (2).

## Patentansprüche

1. Eine Achse für Schienenfahrzeuge, vorzugsweise für Eisenbahnfahrzeuge, deren Achsen aus wärmebehandeltem Material bestehen, **dadurch gekennzeichnet, dass** die Oberfläche der Achse (1) in allen zylindrischen Abschnitten (2a) und den Übergangsbereichen (2b) über die gesamte Länge (L) aus einer verstärkten, induktiv gehärteten Schicht (2) mit gleichmäßiger Tiefe von der Oberfläche der Achse (1) gebildet ist, die in eine Übergangsschicht (3) mit stufenweise abnehmender Verstärkung übergeht.

2. Die Achse für Schienenfahrzeuge nach Anspruch 1, **dadurch gekennzeichnet, dass** die Tiefe der Übergangsschicht (3) mindestens dem 1,5-Fachen der Tiefe der induktiv gehärteten Schicht (2) entspricht.

## Revendications

1. Essieu pour matériel roulant, notamment ferroviaire, dont les essieux sont en matériau traité thermiquement, **caractérisé en ce que**, sur toute la longueur (L) de la surface de l'essieu (1), dans toutes les parties cylindriques (2a) et les parties de transition (2b), la surface de l'essieu (1) est constituée d'une couche renforcée, durcie par induction (2), d'épaisseur uniforme par rapport à la surface de l'essieu (1). Cette couche durcie par induction (2) se prolonge par une couche de transition (3) dont le degré de renforcement diminue progressivement.

2. Essieu pour matériel roulant selon la revendication 1, **caractérisé en ce que** l'épaisseur de la couche de transition (3) est au moins égale à 1,5 fois l'épaisseur de la couche durcie par induction (2).
